# EUROPEAN PATENT APPLICATION

(11) **EP 4 763 356 A1**
(43) Date of publication of application: **24.06.2026**
(21) Application number: 25790608.1
(22) Date of filing: 14.04.2025
(51) Int. Cl.: B05C 5/02, B05C 11/10, H01M 4/04

(54) **DIE COATER**

(30) Priority: 17.04.2024 KR 20240051376
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/005064
(87) International publication number: WO 2025/220995

(57) **Abstract**

Embodiments provide a die coater. The die coater includes a first die with a manifold and a shim coupled to the first die, in which the shim includes a body extending in a first direction and a spacer shim extending in a second direction perpendicular to the first direction and dividing the manifold, the spacer shim defines an insulation flow path configured to discharge insulating slurry, the insulation flow path includes an inlet, a first insulation flow path connected to the inlet, a buffer connected to the first insulation flow path, and a second insulation flow path connected to the buffer, and a width of the second insulation flow path and a width of the buffer are different from each other.

## Description

### [Technical Field]

The present disclosure relates to a die coater.

This application claims the benefit of priority based on Korean Patent Application No. 10-2024-0051376, filed on April 17, 2024, and the entire content of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a coating material containing an active material onto an electrode plate and may be performed by a die coater.

### [Disclosure]

### [Technical Problem]

The present disclosure is directed to providing a die coater with improved coating performance.

### [Technical Solution]

Embodiments of the present disclosure provide a die coater. The die coater includes a first die with a manifold and a shim coupled to the first die, in which the shim includes a body extending in a first direction and a spacer shim extending in a second direction perpendicular to the first direction and dividing the manifold, the spacer shim defines an insulation flow path configured to discharge insulating slurry, the insulation flow path includes an inlet, a first insulation flow path connected to the inlet, a buffer connected to the first insulation flow path, and a second insulation flow path connected to the buffer, and a width of the second insulation flow path and a width of the buffer are different from each other.

The width of the buffer may be greater than the width of the second insulation flow path.

The width of the buffer may be greater than a width of the first insulation flow path.

Each of the first and second insulation flow paths may have a line shape.

The first insulation flow path may extend in the first direction, and the second insulation flow path may extend in the second direction.

A width of the inlet may be greater than a width of the first insulation flow path.

The width of the buffer may be greater than the width of the inlet.

A length of the second insulation flow path may be 5 mm or more.

The spacer shim may include a first trench side wall and a second trench side wall that define the buffer and face each other, each of the first trench side wall and the second trench side wall may have a round shape, and a radius of curvature of the second trench side wall may be greater than a radius of curvature of the first trench side wall.

The radius of curvature of the second trench side wall may be variable.

The spacer shim may include a first trench side wall and a second trench side wall that define the buffer and face each other, each of the first trench side wall and the second trench side wall may have a round shape, and a radius of curvature of the first trench side wall may be equal to a radius of curvature of the second trench side wall.

The first insulation flow path may include a first portion extending in the first direction, a second portion extending in the second direction, and a corner portion connecting the first and second portions, and the second insulation flow path may extend in the second direction.

The first insulation flow path extends in the first direction, and the second insulation flow path may include a first portion extending in the first direction, a second portion extending in the second direction, and a corner portion connecting the first and second portions.

### [Advantageous Effects]

According to embodiments of the present disclosure, an insulation flow path of a spacer shim includes a buffer and thus the pressure of insulating slurry discharged through the insulation flow path may decrease, thereby improving the reliability of a coating process.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 illustrates secondary battery manufacturing equipment according to embodiments.
FIG. 2 is a cross-sectional view of a die coater according to embodiments.
FIG. 3 is an exploded perspective view for describing a die coater according to embodiments.
FIG. 4 illustrates a part of FIG. 3.
FIG. 5 illustrates a part of FIG. 3.
FIG. 6 illustrates a part of FIG. 3.
FIG. 7 is a plan view of a part of a spacer shim according to embodiments.
FIG. 8 is a cross-sectional view taken along line 7I-7I' of FIG. 7.
FIG. 9 is a cross-sectional view taken along line 7II-7II' of FIG. 7.
FIG. 10 is a cross-sectional view taken along line 7III-7III' of FIG. 7.
FIG. 11 is a cross-sectional view taken along line 7IV-7IV' of FIG. 7.
FIG. 12 is a plan view of a part of a spacer shim according to embodiments.
FIG. 13 is a plan view of a part of a spacer shim according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that there may be various equivalents and modifications that can replace the configurations at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

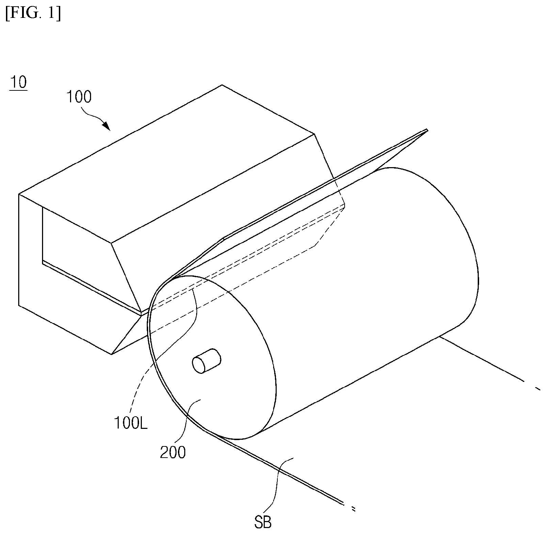

FIG. 1 illustrates secondary battery manufacturing equipment 10 according to embodiments.

According to embodiments, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to embodiments, the die coater 100 may be configured to apply the coating material onto a current collector SB. The coating material may include electrode slurry and insulating slurry. The die coater 100 may be configured to simultaneously provide the electrode slurry and the insulating slurry on the current collector SB.

The electrode slurry may be used to manufacture an electrode of a secondary battery. The electrode slurry may include an electrode active material, a conductive additive, a binder, and a solvent. The electrode slurry may be prepared by dissolving the electrode active material, the conductive additive, the binder, etc. in the solvent. The solvent may disperse the electrode active material and the like. The solvent may be an aqueous solvent or a nonaqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the electrode slurry. Parameters that determine the amount of the solvent to be used include a thickness to which the electrode slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, Cu, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎Aₑ, e.g., Li_{1+z}Ni_{1/3}Co_{1/3}Mn_{1/3}O₂ or Li_{1+z}Ni_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LiₓWO₂ (0≤x≤1), or SnₓMe_{1-xM}e'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive additive may have conductivity without causing a chemical change in a finally manufactured secondary battery. For example, the conductive additive may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force with respect to an electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A thickness of a positive electrode current collector may be in a range of about 3 µm to about 500 µm. The positive electrode current collector may have high conductivity without causing a chemical change in a finally manufactured secondary battery. The positive electrode current collector may include, for example, stainless steel, nickel, titanium, baked carbon, or aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of a film, sheet, foil, net, porosity, foam or non-woven fabric.

A thickness of a negative electrode current collector may be in a range of about 3 µm to about 500 µm. The negative electrode current collector may have high conductivity without causing a chemical change in a finally manufactured secondary battery. The negative electrode current collector may include copper, stainless steel, aluminum, nickel, titanium, baked carbon, or aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of a film, sheet, foil, net, porosity, foam or non-woven fabric.

### (Second embodiment)

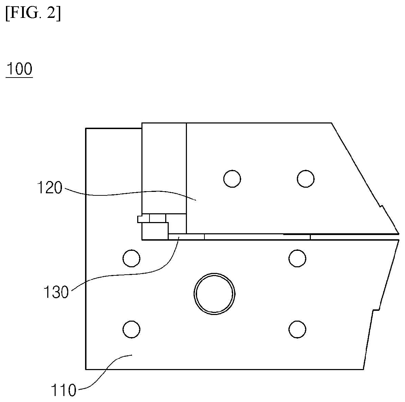

FIG. 2 is a cross-sectional view of a die coater 100 according to embodiments.

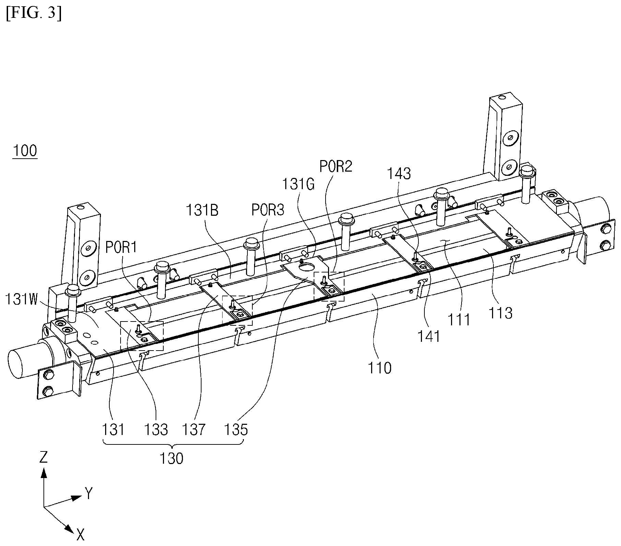

FIG. 3 is an exploded perspective view for describing the die coater 100 according to embodiments. In FIG. 3, a second die 120 is omitted.

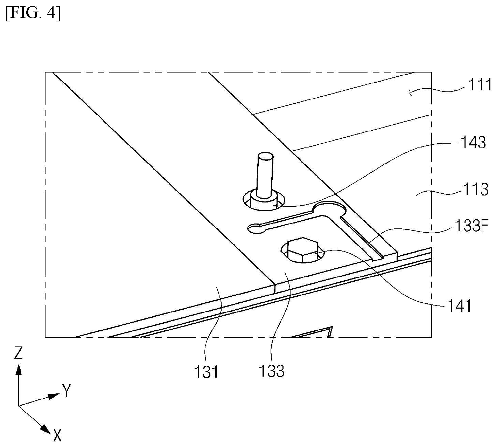

FIG. 4 illustrates a part POR1 of FIG. 3.

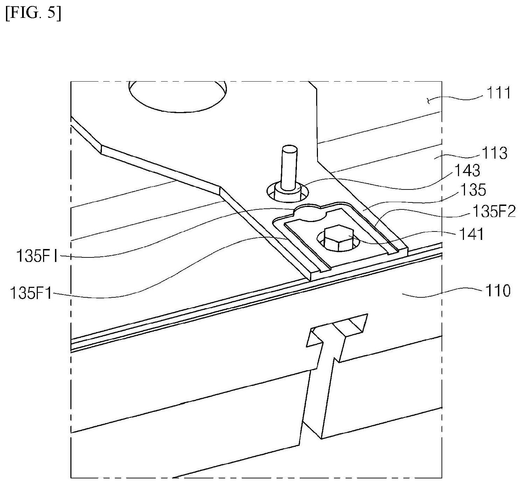

FIG. 5 illustrates a part POR2 of FIG. 3.

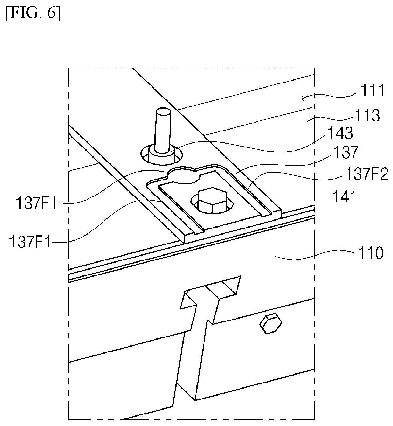

FIG. 6 illustrates a part POR3 of FIG. 3.

Referring to FIGS. 2 to 6, the die coater 100 may include a first die 110, a second die 120, a shim 130, shim fixing devices 141, and shim fixing pins 143.

Hereinafter, the technical idea of the present disclosure will be described with respect to an embodiment in which the first die 110 and the second die 120 are separate elements as described above. Technicians of ordinary skill in the art will be able to easily derive an embodiment in which the first die 110 and the second die 120 are integrated to form an integral die, based on the description herein.

The first die 110 may include a manifold 111 and an electrode slurry supply path connected to the manifold 111. Electrode slurry may flow into the manifold 111 through the electrode slurry supply path. The manifold 111 may be an empty space configured to accommodate the electrode slurry. After the manifold 111 is filled with the electrode slurry, the electrode slurry may be discharged to the outside of the die coater 100. The electrode slurry may be discharged from the manifold 111 to the outside through slits defined by the shim 130 and a land portion 113.

The manifold 111 may have a well shape with a certain depth from the land portion 113. The manifold 111 may include an inclined surface and thus the electrode slurry may be stably discharged from the die coater 100.

The shim 130 may be interposed between the first die 110 and the second die 120. The first die 110 may be in contact with a lower surface of the shim 130. The second die 120 may be in contact with an upper surface of the shim 130. The shim 130 may include a body shim 131 and spacer shims 133, 135 and 137.

The body shim 131 may include a body 131B and wings 131W. The body 131B may extend in a Y-axis direction. The body 131B may be a plate whose width in an X-axis direction is less than a length thereof in the Y-axis direction. Here, the X-axis direction may be a direction in which the electrode slurry is discharged, and the Y-axis direction may be substantially perpendicular to the X-axis direction. The body shim 131 may be substantially parallel to each of the X-axis direction and the Y-axis direction and be substantially perpendicular to a Z-axis direction. The wings 131W may be connected to an end portion of the body 131B in the Y-axis direction. The wings 131W may protrude from the body 131B in the X-axis direction.

The body 131B may include a plurality of grooves 131G. Each of the plurality of grooves 131G may be in a side of the body 131B adjacent to the manifold 111 (e.g., a side of the body 131B overlapping the manifold 111) among sides of the body 131B parallel to the Y-axis direction. Each of the plurality of grooves 131G may be recessed inward from the sides of the body 31B parallel to the Y-axis direction.

The plurality of grooves 131G may correspond to the spacer shims 133, 135 and 137. The plurality of grooves 131G may expose a portion of the first die 110. Each of the spacer shims 133, 135 and 137 may be partially inserted into a corresponding one of the plurality of grooves 131G. The plurality of spacer shims 133, 135 and 137 may be fixed to the portion of the first die 110 exposed via the plurality of grooves 131G by a method such as bolting.

According to embodiments, a width of each of the plurality of grooves 131G in the Y-axis direction may be different from a width of the corresponding one of the spacer shims 133, 135 and 137 in the Y-axis direction. According to embodiments, the width of each of the plurality of grooves 131G in the Y-axis direction may be greater than the width of the corresponding one of the spacer shims 133, 135 and 137 in the Y-axis direction. Accordingly, the plurality of grooves 131G may not only guide the coupling of the spacer shims 133, 135 and 137 but also provide a degree of freedom to the spacer shims 133, 135 and 137 in the Y-axis direction, so that the positions of the spacer shims 133, 135 and 137 may be precisely adjusted in the Y-axis direction.

The spacer shims 133, 135 and 137 may be interposed between the wings 131W in the Y-axis direction. The spacer shims 133, 135 and 137 may overlap the wings 131W in the Y-axis direction.

Referring to FIGS. 2 and 3, according to embodiments, the spacer shims 133 may be adjacent to edges of the shim 130 in the Y-axis direction. According to embodiments, the spacer shims 133 may be adjacent to the wings 131W. According to embodiments, the spacer shims 133 may be in contact with the wings 131W but embodiments are not limited thereto. Each of the spacer shims 133 may be referred to as an edge spacer shim or a first spacer shim.

Each of the spacer shims 133 may include an insulation flow path 133F. The first die 110 may be connected to an insulating slurry supply line, and the insulating slurry flowing through a path in the first die 110 may be introduced into the insulation flow path 133F. The insulation flow path 133F may provide a path for the flow of the insulating slurry. Here, the insulating slurry may be a material having insulation performance and fluidity.

The insulating slurry may be provided onto the current collector SB (see FIG. 1) through the insulation flow path 133F and thus may be provided to cover an edge of the electrode slurry discharged from portions of the manifold 111 between the spacer shims 133 and the spacer shims 137. According to embodiments, the insulating slurry may cover the edge of the electrode slurry, thus improving an edge profile of the electrode slurry and the yield and reliability of a secondary battery manufacturing process. Each of the spacer shims 133 may match one slit for discharging the electrode slurry and thus may include one insulation flow path 133F.

Referring to FIGS. 2 and 4, according to embodiments, the spacer shim 135 may be on a central portion of the shim 130 in the Y-axis direction. According to embodiments, the spacer shim 135 may be interposed between the spacer shims 133. The spacer shim 135 may be referred to as a center spacer shim or a second spacer shim.

The spacer shim 135 may include first and second insulation flow paths 135F1 and 135F2. The first and second insulation flow paths 135F1 and 135F2 may provide a path for the flow of the insulating slurry. The insulating slurry may be provided onto the current collector SB (see FIG. 1) through the first and second insulation flow path 135F1 and 135F2 and thus may be provided to cover an edge of the electrode slurry discharged from portions of the manifold 111 between the spacer shim 135 and the spacer shims 137. The spacer shim 135 may match two slits for discharging the electrode slurry and thus may include the two insulation flow paths 135F1 and 135F2.

Referring to FIGS. 2 and 5, according to embodiments, the spacer shims 137 may be interposed between the spacer shims 133 and the spacer shim 135. Each of the spacer shims 137 may be referred to as an intermediate spacer shim or a third spacer shim.

Each of the spacer shims 137 may include first and second insulation flow paths 137F1 and 137F2. The insulating slurry may be introduced into the first and second insulation flow paths 137F1 and 137F2. The first and second insulation flow paths 137F1 and 137F2 may provide a path for the flow of the insulating slurry. The insulating slurry may be provided onto the current collector SB (see FIG. 1) through the first and second insulation flow paths 137F1 and 137F2 and may be provided to cover an edge of the electrode slurry discharged from a portion of the manifold 111 between the spacer shim 133 and the spacer shim 137 and a portion of the manifold 111 between the spacer shim 135 and the spacer shim 137. Each of the spacer shims 137 may match two slits for discharging the electrode slurry and thus may include the two insulation flow paths 137F1 and 137F2.

The spacer shims 133, 135 and 137 may partially cover the manifold 111. The spacer shims 133, 135 and 137 may overlap the manifold 111 in the Z-axis direction. In FIG. 3, the spacer shims 133, 135 and 137 may divide the manifold 111 into four regions and thus the die coater 100 may be configured to form four coated lanes simultaneously by performing the coating process once.

Technicians of ordinary skill in the art will be able to easily derive a die coater configured to form various numbers of coated lanes, e.g., one, two, eight, sixteen or thirty two coated lanes, based on the description herein. For example, a die coater configured to form eight coated lanes may include a shim that includes two edge spacer shims, one center spacer shim, and six intermediate spacer shims.

Referring to FIGS. 2 to 5, the shim fixing devices 141 and the shim fixing pins 143 may be partially inserted into the land portion 113 of the first die 110. The shim fixing devices 141 and the shim fixing pins 143 may be configured to fix the spacer shims 133, 135 and 137 to the land portion 113 of the first die 110.

The shim fixing devices 141 may be, for example, bolts but are not limited thereto. The shim fixing pins 143 may be, for example, bidirectional pins. Accordingly, the shim fixing pins 143 may be configured to fix the second die 120 together with the shim 130, in addition to the first die 110. Each of the spacer shims 133, 135 and 137 may include fastening holes corresponding to the shim fixing devices 141 and the shim fixing pins 143 (i.e., fastening holes into which the shim fixing devices 141 and the shim fixing pins 143 are inserted and which are penetrated by the shim fixing devices 141 and the shim fixing pins 143).

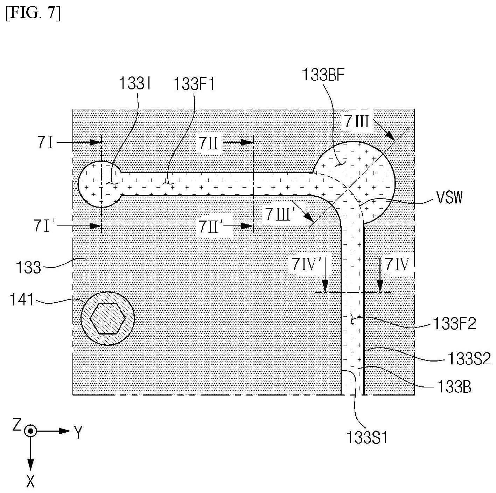

FIG. 7 is a plan view of a part of a spacer shim 133 according to embodiments.

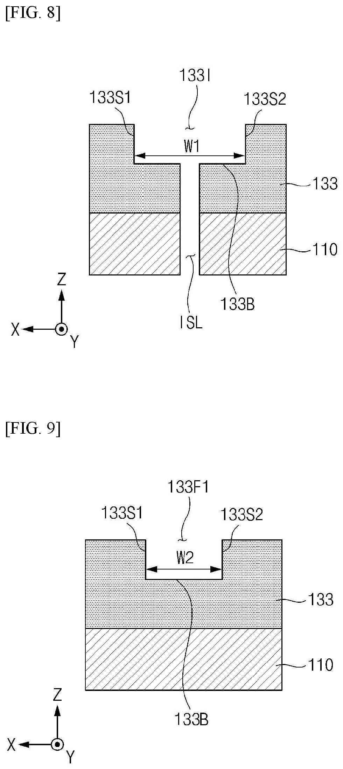

FIG. 8 is a cross-sectional view taken along line 7I-7I' of FIG. 7.

FIG. 9 is a cross-sectional view taken along line 7II-7II' of FIG. 7.

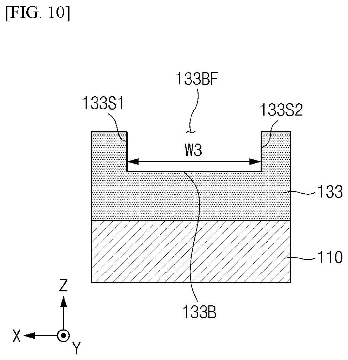

FIG. 10 is a cross-sectional view taken along line 7III-7III' of FIG. 7.

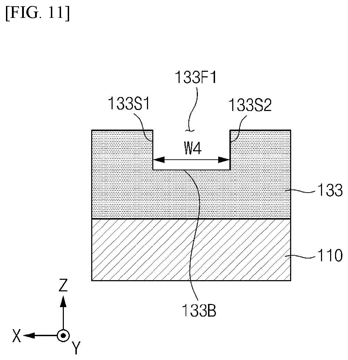

FIG. 11 is a cross-sectional view taken along line 7IV-7IV' of FIG. 7.

Referring to FIGS. 7 to 11, the spacer shim 133 may define the insulation flow path 133F (see FIG. 4). The spacer shim 133 may include a trench base 133B and first and second trench side walls 133S1 and 133S2. The trench base 133B may be substantially perpendicular to the Z-axis direction. The first and second trench side walls 133S1 and 133S2 may be substantially perpendicular to the trench base 133B but embodiments are not limited thereto. The insulation flow path 133F (see FIG. 4) may be a space surrounded by the trench base 133B, the first and second trench side walls 133S1 and 133S2, and the second die 120 (see FIG. 2).

The insulation flow path 133F (see FIG. 4) may include an inlet 133I, a first insulation flow path 133F1, a buffer 133BF, and a second insulation flow path 133F2. The insulation flow path 133F (see FIG. 4) may provide a path for discharging the insulating slurry.

The first insulation flow path 133F1 may have a line shape. The first insulation flow path 133F1 may extend in the Y-axis direction. The first insulation flow path 133F1 may connect the inlet 133I and the buffer 133BF.

The buffer 133BF may be connected to each of the first insulation flow path 133F1 and the second insulation flow path 133F2. The buffer 133BF may be interposed between the first insulation flow path 133F1 and the second insulation flow path 133F2.

The second insulation flow path 133F2 may have a line shape. The second insulation flow path 133F2 may extend in the X-axis direction. The second insulation flow path 133F2 may extend to the lip 100L (see FIG. 1) of the die coater 100 (see FIG. 1). The insulating slurry may be discharged through the second insulation flow path 133F2.

The inlet 133I has a round shape and thus a width W1 of the inlet 133I may be a maximum distance (e.g., a maximum distance in the X-axis direction) between portions of the first and second trench side walls 133S1 and 133S2 that define the inlet 133I.

A width W2 of the first insulation flow path 133F1 may be a distance (e.g., a distance in the X-axis direction) between portions of the first and second trench side walls 133S1 and 133S2 that define the first insulation flow path 133F1.

A width W4 of the second insulation flow path 133F2 may be a distance (e.g., a distance in the Y-axis direction) between portions of the first and second trench side walls 133S1 and 133S2 that define the second insulation flow path 133F2. A length of the second insulation flow path 133F2 (e.g., a length thereof in the X-axis direction) may be about 5 mm or more. For example, the length of the second insulation flow path 133F2 (e.g., the length thereof in the X-axis direction) may be 50 mm or less. An experimental example reveals that when the length of the second insulation flow path 133F2 is 5 mm or more, the insulating slurry was stably supplied regardless of a change in a flow area between the buffer 133BF and the second insulation flow path 133F2.

Portions of the first and second trench side walls 133S1 and 133S2 that define the buffer 133BF may have a round shape. A width W3 of the buffer 133BF may be defined by orthogonal projection of the normal of the first trench side wall 133S1 onto the second trench side wall 133S2. More specifically, when it is defined that a point on the portion of the first trench side wall 133S1 defining the buffer 133BF is a first point and a point at which the normal of the first trench side wall 133S1 is orthogonally projected onto the second trench side wall 133S2 is a second point, the width W3 of the buffer 133BF may be a distance between the first and second points.

The width W2 of the first insulation flow path 133F1 and the width W4 of the second insulation flow path 133F2 may be substantially the same but embodiments are not limited thereto. The width W2 of the first insulation flow path 133F1 and the width W4 of the second insulation flow path 133F2 may be different from each other.

The width W1 of the inlet 133I may be different from the width W2 of the first insulation flow path 133F1 and the width W4 of the second insulation flow path 133F2. The width W1 of the inlet 133I may be greater than the width W2 of the first insulation flow path 133F1 and the width W4 of the second insulation flow path 133F2.

The width W3 of the buffer 133BF may be different from the width W2 of the first insulation flow path 133F1 and the width W4 of the second insulation flow path 133F2. The width W3 of the buffer 133BF may be greater than the width W2 of the first insulation flow path 133F1 and the width W4 of the second insulation flow path 133F2. The width W3 of the buffer 133BF may be different from the width W1 of the inlet 133I. The width W3 of the buffer 133BF may be greater than the width W1 of the inlet 133I.

Referring back to FIGS. 3 to 6, each of the spacer shims 133 is on an edge portion of the die coater 100 and thus includes one insulation flow path 133F, whereas the spacer shim 135 may include two insulation flow paths 135F1 and 135F2 and the spacer shim 137 may include two insulation flow paths 137F1 and 137F2. According to embodiments, the width W3 of the buffer 133BF is greater than the width W1 of the inlet 133I, the width W2 of the first insulation flow path 133F1, and the width W4 of the second insulation flow path 133F2, thus reducing the pressure of the insulating slurry discharged through the insulation flow path 133F. Accordingly, the uniformity and reliability of the coating process may improve.

Referring back to FIGS. 7 to 11, a radius of curvature of the portion of the first trench side wall 133S1 defining the buffer 133BF may be different from a radius of curvature of the portion of the second trench side wall 133S2 defining the buffer 133BF. According to embodiments, the radius of curvature of the portion of the second trench side wall 133S2 defining the buffer 133BF may be greater than the radius of curvature of the portion of the first trench side wall 133S1 defining the buffer 133BF. The radius of curvature of the second trench side wall 133S2 may be variable.

According to embodiments, the buffer 133BF may be biased toward the second trench side wall 133S2 rather than the first trench side wall 133S1. That is, in the present example, the buffer 133BF may be an extended corner portion connecting the first insulation flow path 133F1 and the second insulation flow path 133F2. The portion of the first trench sidewall 133S1 defining the buffer 133BF may have a round shape smoothly connecting the first insulation flow path 133F1 and the second insulation flow path 133F2. An example of the round shape smoothly connecting the first and second insulation flow paths 133F1 and 133F2 is a portion of a circle (i.e., an arc).

The portion of the second trench side wall 133S2 defining the buffer 133BF may be further spaced apart from the first trench side wall 133S1 with respect to a round virtual side wall VSW smoothly connecting the first insulation flow path 133F1 and the second insulation flow path 133F2. Accordingly, the buffer 133BF may be efficiently filled with the insulating slurry flowing along the first insulation flow path 133F1, and the pressure of the insulating slurry may decrease.

### (Third Embodiment)

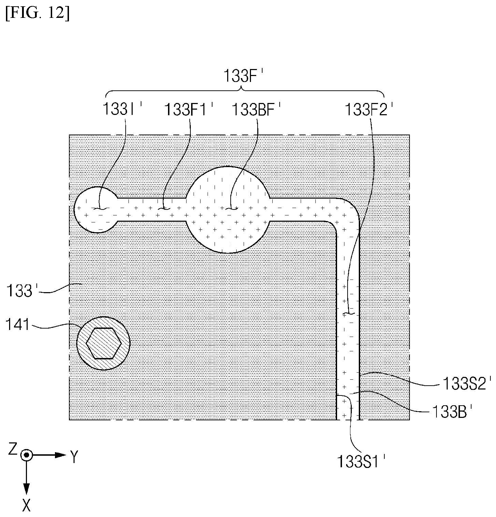

FIG. 12 is a plan view of a part of a spacer shim 133' according to embodiments.

According to embodiments, the spacer shim 133' may define an insulation flow path 133F'. The spacer shim 133' may include a trench base 133B' and first and second trench side walls 133S1' and 133S2'. The trench base 133B' may be substantially perpendicular to the Z-axis direction. The first and second trench side walls 133S1' and 133S2' may be substantially perpendicular to the trench base 133B' but embodiments are not limited thereto. The insulation flow path 133F' may be a space surrounded by the trench base 133B', the first and second trench side walls 133S1' and 133S2', and the second die 120 (see FIG. 2).

The insulation flow path 133F' may include an inlet 133I', a first insulation flow path 133F1', a buffer 133BF', and a second insulation flow path 133F2'. The insulation flow path 133F' may provide a path for discharging the insulating slurry. The inlet 133I' may be the same as the inlet 133I of FIG. 7.

The first insulation flow path 133F1' may have a line shape. The first insulation flow path 133F1' may extend in the Y-axis direction. The first insulation flow path 133F1' may connect the inlet 133I' and the buffer 133BF'.

The buffer 133BF' may be connected to each of the first insulation flow path 133F1' and the second insulation flow path 133F2'. The buffer 133BF' may be interposed between the first insulation flow path 133F1' and the second insulation flow path 133F2'.

In the present example, portions of the first and second trench side walls 133S1' and 133S2' that define the buffer 133BF' may be symmetrical. Accordingly, a radius of curvature of a portion of the first trench side wall 133S1' defining the buffer 133BF' may be substantially the same as a radius of curvature of a portion of the second trench side wall 133S2' defining the buffer 133BF'.

The second insulation flow path 133F2' may include a first portion extending in the Y-axis direction, a second portion extending in the X-axis direction, and a corner portion between the first and second portions. The second insulation flow path 133F2' may extend to the lip 100L (see FIG. 1) of the die coater 100 (see FIG. 1). The insulating slurry may be discharged through the second insulation flow path 133F2'.

### (Fourth Embodiment)

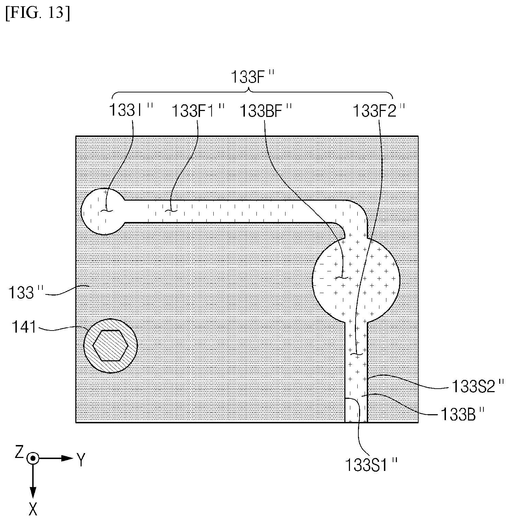

FIG. 13 is a plan view of a part of a spacer shim 133" according to embodiments.

According to embodiments, the spacer shim 133" may define an insulation flow path 133F". The spacer shim 133" may include a trench base 133B" and first and second trench side walls 133S1" and 133S2". The trench base 133B" may be substantially perpendicular to the Z-axis direction. The first and second trench side walls 133S1" and 133S2" may be substantially perpendicular to the trench base 133B" but embodiments are not limited thereto. The insulation flow path 133F" may be a space surrounded by the trench base 133B", the first and second trench side walls 133S1" and 133S2", and the second die 120 (see FIG. 2).

The insulation flow path 133F" may include an inlet 133I", a first insulation flow path 133F1", a buffer 133BF", and a second insulation flow path 133F2". The insulation flow path 133F" may provide a path for discharging the insulating slurry. The inlet 133I" may be the same as the inlet 133I of FIG. 7.

The first insulation flow path 133F1" may include a first portion extending in the Y-axis direction, a second portion extending in the X-axis direction, and a corner portion between the first and second portions. The first insulation flow path 133F1" may connect the inlet 1331" and the buffer 133BF".

The buffer 133BF" may be connected to each of the first insulation flow path 133F1" and the second insulation flow path 133F2". The buffer 133BF" may be interposed between the first insulation flow path 133F1" and the second insulation flow path 133F2".

In the present example, portions of the first and second trench side walls 133S1" and 133S2" that define the buffer 133BF" may be symmetrical. Accordingly, a radius of curvature of a portion of the first trench side wall 133S1" defining the buffer 133BF" may be substantially the same as a radius of curvature of a portion of the second trench side wall 133S2" defining the buffer 133BF".

The second insulation flow path 133F2" may have a line shape. The second insulation flow path 133F2" may extend in the X-axis direction. The second insulation flow path 133F2" may extend to the lip 100L (see FIG. 1) of the die coater 100 (see FIG. 1). The insulating slurry may be discharged through the second insulation flow path 133F2". In the present embodiment, a length of the second insulation flow path 133F2" (e.g., a length thereof in the X-axis direction) may be about 5 mm or more.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that there may be various equivalents and modifications that can replace the configurations at the filing date of the present application.

## Claims

1. A die coater comprising:
a first die with a manifold; and
a shim coupled to the first die,
wherein the shim includes a body extending in a first direction, and a spacer shim extending in a second direction perpendicular to the first direction and dividing the manifold,
the spacer shim defines an insulation flow path configured to discharge insulating slurry,
the insulation flow path includes an inlet, a first insulation flow path connected to the inlet, a buffer connected to the first insulation flow path, and a second insulation flow path connected to the buffer, and
a width of the second insulation flow path and a width of the buffer are different from each other.

2. The die coater of claim 1, wherein the width of the buffer is greater than the width of the second insulation flow path.

3. The die coater of claim 1, wherein the width of the buffer is greater than a width of the first insulation flow path.

4. The die coater of claim 1, wherein each of the first and second insulation flow paths has a line shape.

5. The die coater of claim 1, wherein the first insulation flow path extends in the first direction, and
the second insulation flow path extends in the second direction.

6. The die coater of claim 1, wherein a width of the inlet is greater than a width of the first insulation flow path.

7. The die coater of claim 6, wherein the width of the buffer is greater than the width of the inlet.

8. The die coater of claim 1, wherein a length of the second insulation flow path is 5 mm or more.

9. The die coater of claim 1, wherein the spacer shim includes a first trench side wall and a second trench side wall that define the buffer and face each other,
wherein each of the first trench side wall and the second trench side wall has a round shape, and
a radius of curvature of the second trench side wall is greater than a radius of curvature of the first trench side wall.

10. The die coater of claim 9, wherein the radius of curvature of the second trench side wall is variable.

11. The die coater of claim 1, wherein the spacer shim includes a first trench side wall and a second trench side wall that define the buffer and face each other,
wherein each of the first trench side wall and the second trench side wall has a round shape, and
a radius of curvature of the first trench side wall is equal to a radius of curvature of the second trench side wall.

12. The die coater of claim 1, wherein the first insulation flow path includes a first portion extending in the first direction, a second portion extending in the second direction, and a corner portion connecting the first and second portions, and
the second insulation flow path extends in the second direction.

13. The die coater of claim 1, wherein the first insulation flow path extends in the first direction, and
the second insulation flow path includes a first portion extending in the first direction, a second portion extending in the second direction, and a corner portion connecting the first and second portions.
